Europäisches Patentamt

European Patent Office

Office européen des brevets

(19)

(11) **EP 1 274 162 A1**

(12) # EUROPEAN PATENT APPLICATION

(43) Date of publication:
**08.01.2003 Bulletin 2003/02**

(51) Int Cl.7: **H02M 1/00**

(21) Application number: **01830449.3**

(22) Date of filing: **04.07.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Magnetek S.p.A.**
**52028 Terranuova Bracciolini (Arezzo) (IT)**

(72) Inventors:
• **Canova, Antonio**
**52025 Montevarchi, Arezzo (IT)**

• **Martini, David**
**52028 S.Giovanni Valdarno, Arezzo (IT)**
• **Bianchi, Andrea**
**52028 S.Giovanni Valdarno, Arezzo (IT)**

(74) Representative: **Mannucci, Michele et al**
**Ufficio Tecnico Ing.A. Mannucci,**
**Via della Scala 4**
**50123 Firenze (IT)**

(54) **Device and method for adaptive power factor correction**

(57)     Described herein is an active device for power factor correction, comprising a connection (3, 5) to a supply network, a rectifier bridge (1), at least one bulk capacitor (11), a connection (23, 25) to a load circuit (Z), and a corrector circuit (15) for correcting the power factor. Through the corrector circuit there flows a fraction of the power absorbed from the supply network.

Fig.1

**Description**

The present invention relates to a device and method for correction of the power factor of power electronic equipment.

The power factor of power electronic equipment is somewhat low (0.5-0.6) because the waveform of the absorbed current at input is distorted on account of the non-linear elements contained therein. International standards pose ever more restrictive limits on the harmonic content of the absorbed current. The problem becomes particularly delicate for those low-cost devices on which the standards impose limits in absolute value on the harmonics, the reason being that every intervention involves a non-negligible increase in cost and in overall dimensions which the equipment is subject to if it is to integrate within it devices that reduce the harmonic content of the current absorbed from the line. Problems associated to the need to correct the power factor are encountered, for example, in equipment for supplying household appliances, such as washing machines, dish washers, air-conditioning equipment, and so forth, as well as in general in inverters for the supply of electric machines.

There currently exist two approaches to solving the problem of the high harmonic content, and hence the low power factor, of this electronic equipment: the first approach uses passive devices, whilst the second approach adopts active devices.

The passive approach consists in using filters (typically, coils) in order to improve the waveform of the current absorbed by the equipment. To obtain significant corrections, large-sized and high-cost components are needed. The serious drawback of this solution lies in the fact that the filters used determine a decrease in the useful voltage for the equipment to which the device for correcting the power factor (PF). That is, to be able to filter significantly the harmonics of a higher order, the voltage drop across the coil or other filter device becomes anything but negligible.

The active approach is not affected by the drawbacks of the passive approach but involves considerable increase in the cost of the system. The biggest problem linked to the use of active devices lies in the generation of electromagnetic interference.

Both approaches, however, penalize the overall efficiency of the system to a major extent because they are traversed by the entire power. In other words, all the power absorbed by the equipment or by the generic load to which the device for power factor correction is associated traverses the latter, with a consequent high power loss.

The object of the present invention is to provide a device and method for power factor correction which will rule out the drawbacks of the active and passive approaches currently adopted.

More in particular, the object of the present invention is to provide an active device for power factor correction which will be more economical and efficient than the devices currently in use.

The above and further objects and advantages, which will appear clearly to persons skilled in the art from the ensuing text, are substantially achieved with a device for power factor correction that comprises a connection to a supply network, a rectifier bridge, at least one bulk capacitor, a connection to a load circuit, and a corrector circuit for power factor correction, said device being characterized in that through said corrector circuit there passes a fraction of the power absorbed from the supply network.

Basically, the invention envisages a device that is able to correct the power factor in an adaptive way, i.e., that is able to modify the waveform of the absorbed current just enough to meet the specifications set by international standards. This is made possible by the fact that the limits on the harmonic content of the absorbed current are imposed in absolute terms (i.e., as values in amperes of the individual harmonics), and not in percentage terms. Consequently, the invention is based upon the idea of intervening with the power factor correction only at the moment in which this is necessary, and only to the extent necessary to cause the harmonic content to fall within the limit imposed (i.e., the power factor must be above the minimum value required). The advantage consists in a better overall efficiency, reduced electromagnetic pollution, smaller overall dimensions, and a lower cost.

Since the limits of the harmonic content are expressed in absolute value, it follows that the system made up of the load (generic supplied equipment) and the power factor correction device will not entail any operation of correction of the power factor if the power absorbed from the network is lower than a certain value. As the power absorbed increases, the system might no longer comply with the standards, and consequently the device for correcting the power factor goes into action. However, the correction required is small. It has been experimentally found that there exists a wide range of absorbed powers in which it is possible to correct the harmonic content of the absorbed current maintaining the power that traverses the correction system low.

Since the power levels involved are considerable, traditional approaches (both of a passive type and of an active type) would entail the use of devices for correcting the power factor that have a major impact, both in economic terms and in mechanical terms, because they are traversed by the entire power involved.

Instead, if the device and method according to the invention are used, it is possible to reduce the costs and overall dimensions considerably, as well as to maximize the efficiency of the system.

The possibility of modulating the power that passes through the power factor correction device makes it possible to achieve maximum efficiency of the system because the losses are proportional to the power managed by the device itself and not to the entire power absorbed by the load.

In practice, the corrector circuit may be connected in parallel to the rectifier bridge of the device by means of a first connection and a second connection, connected to the positive pole and to the negative pole of the bridge itself. Such an arrangement differs substantially from the active corrector devices of a known type, which are arranged in series between the rectifier bridge and the bulk capacitor in such a way as to be traversed by the entire power absorbed from the network. In contrast with this, in the device according to the invention there passes through the corrector circuit a current which is a function of the total power absorbed by the load circuit, and, more in particular, the minimum current necessary for the current globally absorbed by the network to have a power factor higher than a preset limit, i.e., a harmonic content that falls within the standards that are currently in force.

According to a practical embodiment of the invention, the corrector circuit corrects the waveform of the current absorbed by the device (when this is required according to the harmonic content in absolute value of the current absorbed by the load) by superimposing on the current absorbed by the load a current absorbed by the corrector circuit having a high-frequency waveform and an envelope at a low frequency that is substantially sinusoidal.

According to a possible embodiment, it may be envisaged that the high-frequency current will have a waveform with a duty cycle which is a function of the amount of correction required from said corrector circuit. According to a different embodiment, it may be envisaged that the high-frequency current will have a waveform with a frequency that varies according to the amount of correction required from said corrector circuit.

Preferably, the corrector circuit is deactivated not only when the power absorbed by the load is of an amount such that it does not require power factor correction, but also during current-absorption peaks of the load.

According to an improved embodiment of the invention, it is envisaged that during at least a fraction of the time of activation of the corrector circuit, the latter will transfer energy to the bulk capacitor. In this way, the absorption peak is reduced, and the power factor is further improved. In this case, it may advantageously be envisaged that the positive pole of the rectifier bridge will be connected to a first plate of the bulk capacitor with interposition of at least one unidirectional element (in practice, for example, a diode) and that the first connection of the corrector circuit will be applied between the positive pole of the rectifier bridge and said unidirectional element. It is moreover envisaged in this case that said corrector circuit will have a third connection between said unidirectional element and said first plate of the bulk capacitor via which energy transfer to the capacitor itself takes place.

From a constructional point of view, the corrector circuit may comprise at least one first controlled switch and at least one inductive element, as well as a control unit, for instance a microprocessor, even a low-cost one, which drives opening and closing of the controlled switch. Driving of the control switch takes place according to the need for power factor correction, and hence in practice according to the power absorbed by the load from the network.

According to a first possible embodiment of the circuitry, the corrector circuit comprises a transformer, the primary winding of which forms said inductive element and is set between the first connection and the second connection via which the corrector circuit is connected to the two poles of the rectifier bridge. The controlled switch can be arranged in series to the first winding of the transformer, whilst the second winding may be set between the second connection and the third connection of the corrector circuit in such a way as to enable transfer of magnetizing energy from the transformer to the bulk capacitor.

In a different embodiment, the control circuit may comprise a single inductive winding and a pair of switches that are controlled and driven synchronously, according to the amount of correction required.

In yet another different embodiment of the invention, the corrector circuit comprises an LC resonant cell and a pair of controlled switches in a half-bridge configuration. In practice, the LC resonant cell is set between the first connection of the circuit to the positive pole of the rectifier bridge and the centre of the half-bridge, whilst the latter is set between the second connection and the third connection of the corrector bridge.

In order to operate in an adaptive way, i.e., according to the power absorbed by the load, the device is advantageously provided with sensing means for detecting the power absorbed by the load and with a control unit for driving said corrector circuit according to the measurement performed by said sensing means. Said sensing means may comprise a resistor for reading the current supplied to the load and a voltage divider for measuring the voltage across the bulk capacitor. The product of the voltage across the bulk capacitor and the average current on the load is equal to the power absorbed. The above two values, which are substantially continuous (i.e., fluctuating slowly with respect to the switching times of the switches within the corrector circuit), are sampled at low frequency and are used as input parameters of a simple microcontroller, the output of which is used for driving the corrector circuit.

The invention also regards a method for power factor correction in a supply of a load via an electric power supply network, characterized by modifying the waveform of the current absorbed from said network in a way that varies according to the power absorbed by the load.

In practice, the method may envisage that a rectifier bridge is provided, followed by at least one bulk capacitor, across which said load is applied, and that a corrector circuit is set in parallel to said rectifier bridge, said corrector circuit absorbing from the network a current that is a function of the power absorbed by the load, in such a way as to maintain the power factor of the overall current absorbed from the network above a pre-set value.

Further advantageous features of the device and method according to the invention are specified in the attached claims.

A better understanding of the invention will be provided by the ensuing description and the attached plate of drawings illustrating practical, non-limiting embodiments of the invention. In greater detail:

Fig. 1 shows a schematic block diagram of the device according to the invention;
Figs. 2A and 2B are schematic illustrations of the operating principle of the device of Fig. 1;
Fig. 3 shows the waveform of the current absorbed by a power electronic system provided with a diode bridge and bulk capacitors, superimposed on the sinusoidal waveform of the network voltage;
Fig. 4 shows the waveform of the current absorbed by the device according to the invention, superimposed on the sinusoidal waveform of the network voltage;
Fig. 5 shows a superimposition of the diagrams of Figs 3 and 4, in which the current absorbed by the corrector circuit is replaced by the corresponding envelope;
Fig. 6 shows a diagram of a first practical embodiment of the corrector circuit;
Fig. 7 shows a diagram of the currents circulating in the corrector circuit of Fig. 6;
Fig. 8 shows a diagram of a second practical embodiment of the corrector circuit;
Fig. 9 shows a diagram of a third practical embodiment of the corrector circuit;
Fig. 10 shows the plots in time of the voltage and current in the corrector circuit of Fig. 9;
Figs 11A-11D show the configurations of the circuit of Fig. 9 in the four operating phases;
Fig. 12 shows the plots of the current absorbed by the corrector circuit and the current supplied by the circuit to the bulk capacitor; and
Fig. 13 and 14 show the plots of the current absorbed by the device of Fig. 9 in several operating conditions, Fig. 13 also containing a portion of graph where intervention of the corrector circuit is absent.

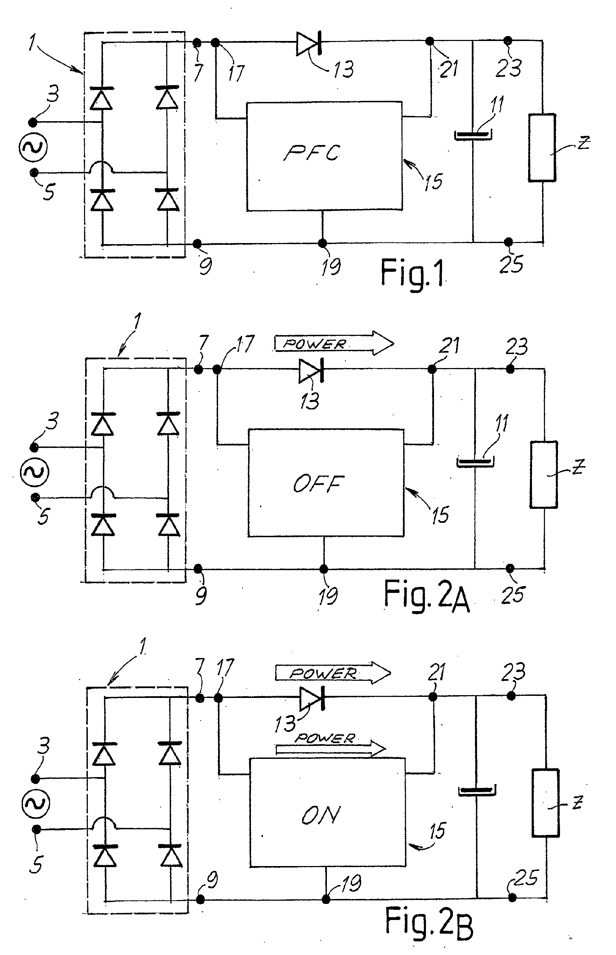

The operating principle of the device and method according to the invention may be illustrated from a conceptual point of view with reference to Figs 1, 2A and 2B. The device comprises a diode rectifier bridge, designated as a whole by 1, which has a connection 3, 5 to an AC supply voltage source, for example a normal electric power supply network. The positive pole and negative pole of the rectifier bridge, designated by 7 and 9, are connected to a levelling component, represented, by way of example, by an electrolytic bulk capacitor 11. Set between the positive pole 7 of the rectifier bridge 3 and the first plate of the electrolytic capacitor 11 is a unidirectional element in the form of a diode 13.

The reference number 15 designates, as a whole, a corrector circuit for power factor correction, which has three connections for connecting to the remaining parts of the device. One first connection, designated by 17, is between the positive pole 7 of the rectifier bridge 1 and the diode 13. A second connection 19 is to the negative pole of the rectifier bridge 1, and the third connection 21 is between the diode 13 and the positive plate of the electrolytic capacitor 11.

As may be noted from the block diagram of Fig. 1, the corrector circuit 15 is basically set in parallel to the diode bridge 1. The corrector circuit remains inactive as long as the power P absorbed by the load, designated as a whole by Z and applied to the connections 23, 25 in parallel to the electrolytic capacitor 11, absorbs a power such that the current supplied by the line to the diode bridge 1 falls within the limits set by the standards in terms of absolute value of the harmonic content. When the power P absorbed by the load Z increases, also the harmonic content increases proportionally and tends to exceed the limits allowed, sending the power factor below the minimum pre-set value.

To prevent this from happening, the corrector circuit 15 is activated, and a current which is a function of the power P absorbed by the load flows through it. Power factor correction is performed in an active way by the corrector circuit 15 exclusively on the current that flows through it, and not on the entire current supplied to the load. Furthermore, the correction is performed only if the power P absorbed by the load is such as to cause the power factor to drop below the minimum value allowed. Figs 2A and 2B show the two operating conditions from a qualitative standpoint. In Fig. 2A, the corrector circuit 15 is deactivated, and the entire power supplied by the line to the rectifier bridge 1 by-passes the corrector circuit 15. In Fig. 2B, the corrector circuit 15 is active, and one part of the power absorbed from the network passes through the corrector circuit 15, which performs the power factor correction by modifying the waveform of the current globally absorbed through the rectifier bridge 1.

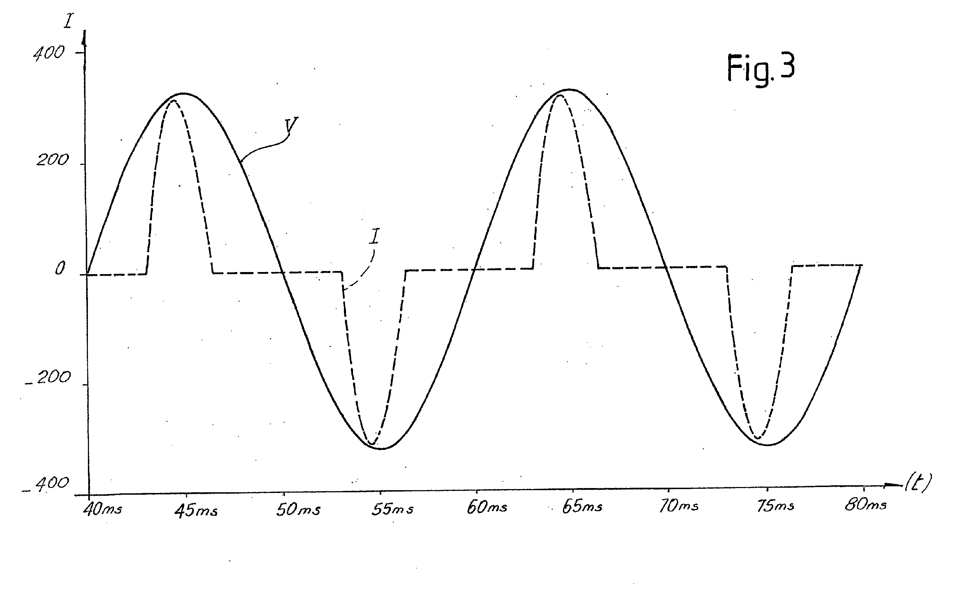

In Fig. 3, the curve V represents the (sinusoidal) plot in time of the main voltage, and the curve I the typical plot in time of the waveform of the current absorbed from a power supply with rectifier bridge and bulk capacitors of the type illustrated in Fig. 1, without the corrector circuit or with the corrector circuit inactive. The waveform of the current absorbed is characterized by absorption peaks located approximately in the region of maximum voltage, and by areas of zero absorption.

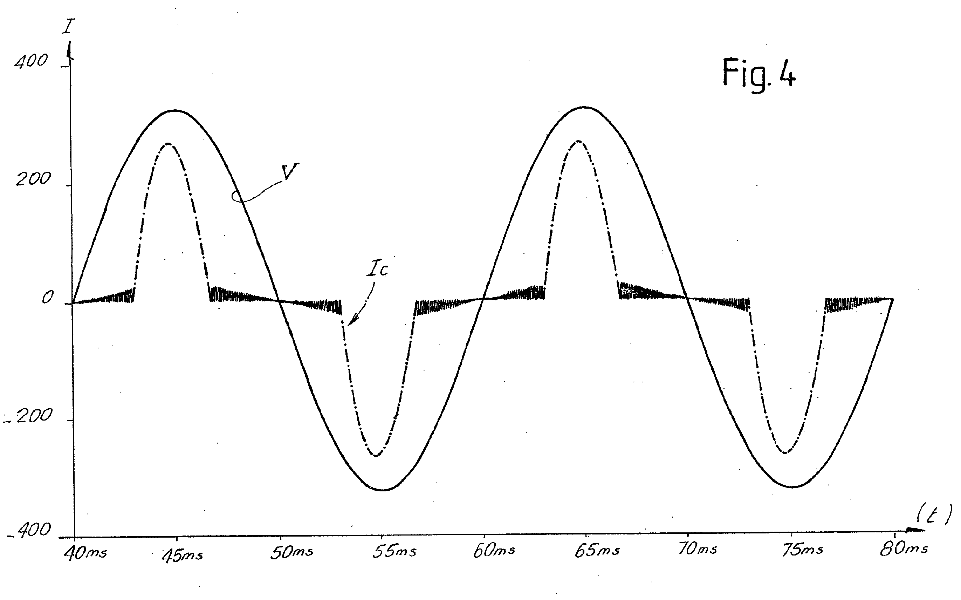

The corrector circuit 15, if activated, behaves like a current generator in parallel to the rectifier bridge 1, which generates a high-frequency current with a sinusoidal envelope, which is superimposed on the current absorbed by the load (curve I of Fig. 3). There results therefrom a current absorbed from. the main presenting a plot of the type illustrated in Fig. 4, and here designated by Ic and once again represented superimposed on the waveform V of the main voltage. The waveform of the current Ic again presents absorption peaks approximately at the maxima of the curve V, but between one peak and the next the current absorbed follows the high-frequency pattern of the current that flows through the corrector circuit 15, with a sinusoidal envelope.

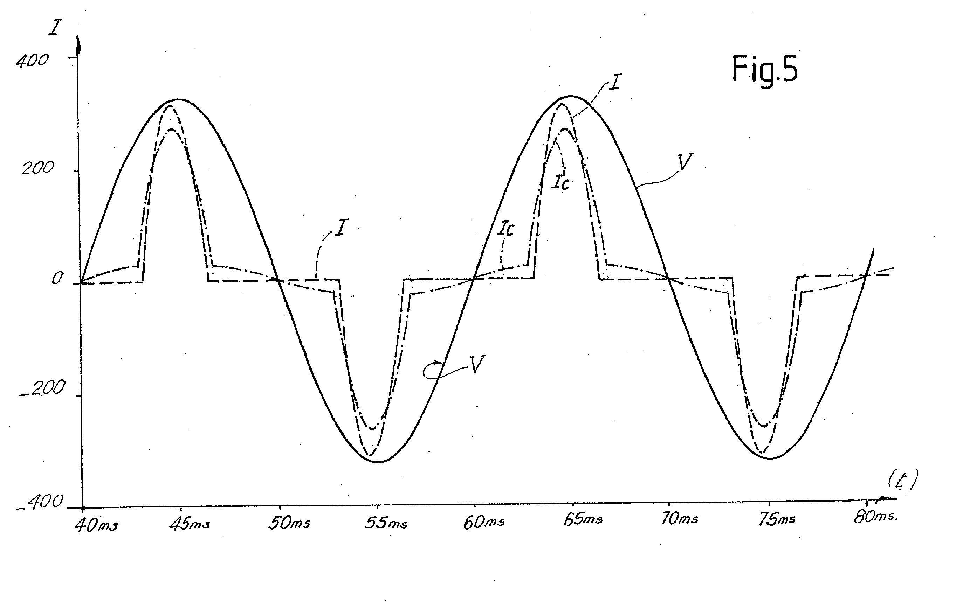

In addition, the absorption peaks have a smaller amplitude and a slightly longer duration than the peaks of the curve of Fig. 3. This may be easily seen in the representation of Fig. 5, where the curves of the diagrams of Figs 2 and 3 have been superimposed and where the plot of the current between consecutive absorption peaks has been replaced, for reasons of clarity of representation, by the corresponding sinusoidal envelopes. The reduction in the amplitude of the absorption peak is partly due also to the fact that the energy stored in the corrector circuit 15 is fed back into the bulk capacitor 11, as will be more clearly illustrated with reference to some examples of circuit implementation of the device described herein from a qualitative standpoint.

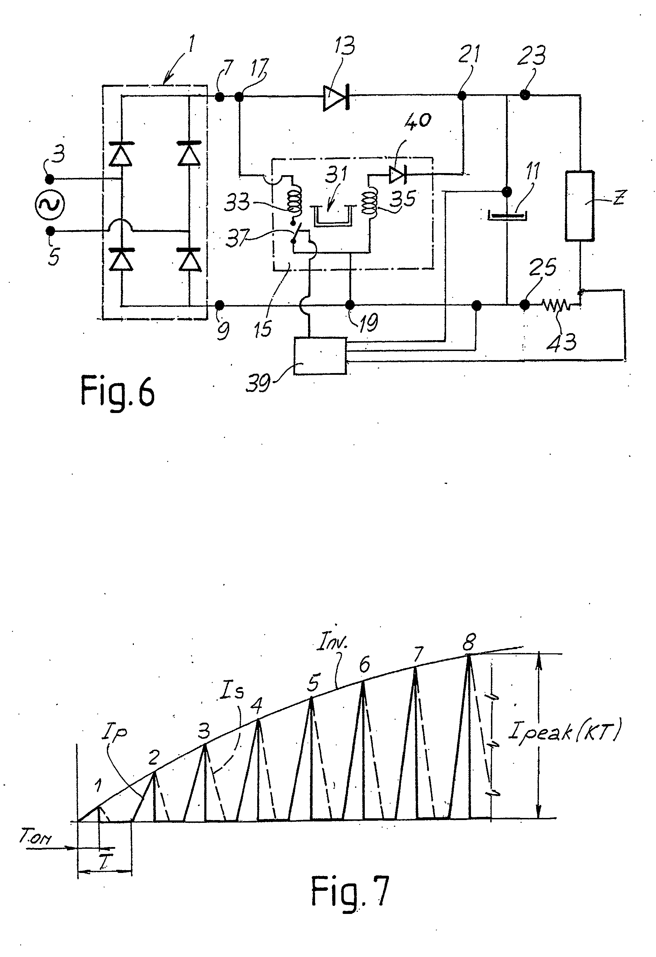

A first modality for implementing the corrector circuit 15 is illustrated in the diagram of Fig. 6, in which reference numbers that are the same designate parts that are the same as or that correspond to those of the simplified diagram of Fig. 1. In this example of embodiment, the corrector circuit 15 comprises a transformer 31 with a first winding 33 and a second winding 35. Set in series to the first winding 33 is a controlled switch 37, the switching of which is driven by a control unit 39, again forming part of the circuit 15. The winding 33 is set between the connections 17 and 19 of the corrector circuit, whilst the winding 35 is set between the connection 19 and the connection 21. A diode 40 is set in series to the secondary winding.

The control unit 39 receives at input a signal that is a function of the power P absorbed by the load Z, detectable through a measurement of voltage across the electrolytic capacitor 11 and of current through a measuring resistor 43, as discussed in greater detail in what follows. According to the value of the power P absorbed by the load, the control unit drives opening and closing of the electronic switch 37 in such a way that through the corrector circuit 15, between the connections 17 and 19, there flows a high-frequency current having a waveform with sinusoidal envelope, as described with reference to Fig. 4 and 5, and with an intensity such as to guarantee compliance with the standards in terms of harmonic content of the overall current absorbed by the device.

Via switching at a fixed frequency of the switch 37, the corrector circuit 15 absorbs a fixed-frequency triangular current $Ip$ with a sinusoidal envelope at a low frequency, as described previously. In fact, the slope of the absorbed current, when the electronic switch 37 is ON, is

$$\frac{dIp}{dt} = \frac{Vi}{L}$$

where

    $t$ is the time;
    $Vi$ is the voltage between the poles 7 and 9 of the rectifier bridge;
    $L$ is the inductance of the transformer 31;

and where the input voltage is

$$Vi = V|sin(\omega \cdot t)|$$

Denoting by $T$ the period of high-frequency switching of the switch 37 and by $\delta$ the duty cycle, the maximum value $Ipeak$ of the current in the winding 33 at the end of the k-th time of ON is

$$Ipeak(kT) = \frac{dVi}{L} \cdot T_{ON} = \frac{V \cdot \delta T}{L} \cdot |sin(\omega \cdot kT)|$$

It follows that the envelope of the waveform of the current $Ip$ possesses the desired characteristics. It should be noted that the amplitude of the current is directly proportional to the duty cycle, and consequently the amount of the power factor correction can be controlled in a simple way by varying the duty cycle according to the power P absorbed by the load.

The magnetizing energy accumulated in the transformer 31 is discharged at a constant voltage through the secondary winding of the transformer. The slope of the discharge current $Is$ is

$$\frac{dIs}{dt} = \frac{V_{DC}}{L}$$

where $L$ is the inductance and $V_{DC}$ is the voltage across the bulk capacitor 11. Since the voltage across the bulk capacitor is roughly constant, the current on the secondary winding 35 decreases with a constant slope. The diode 13 prevents reversal of current flow.

The plots of the currents $Is$ and $Ip$ are schematically represented in the diagram of Fig. 7. This diagram also shows the value of the peak current at the sixth turning-on period of the switch, as well as the envelope, designated by $I_{NV}$.

It is clear that, in order to obtain a more marked correction of the waveform of the absorbed current it is sufficient to increase the duty cycle of the switch 37, and hence the current, and consequently the power that passes through the corrector circuit 15.

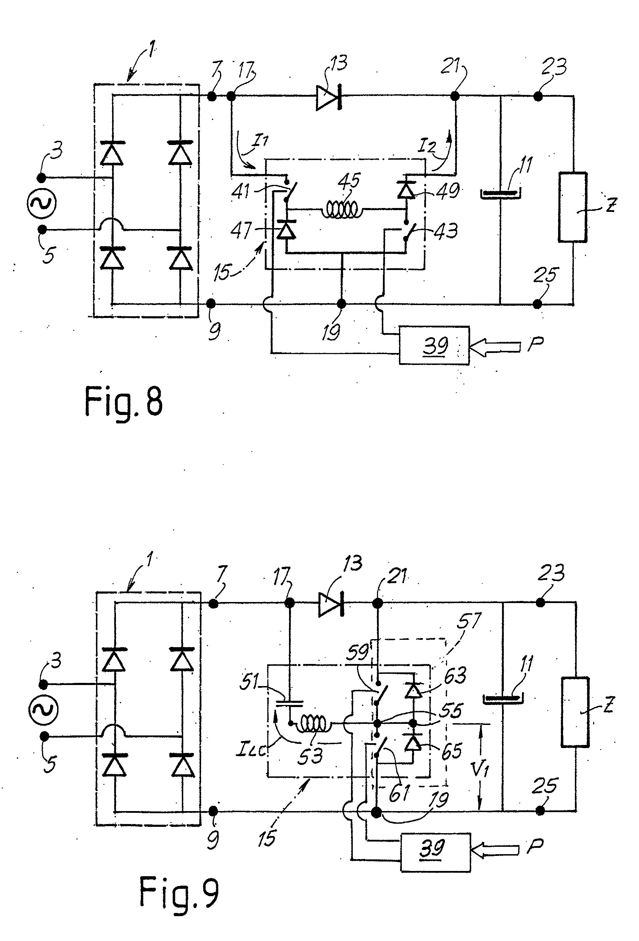

Fig. 8 shows a second embodiment of the corrector circuit 15. Reference numbers that are the same designate parts that are the same as or that correspond to those of the schematic diagram of Fig. 1. The reference number 39 once again designates a control unit which receives at input information regarding the power P absorbed by the load Z, and drives synchronously a pair of electronic switches 41, 43. These switches connect a single winding 45 respectively to the connections 17 and 19 of the corrector circuit 15. Across the winding 45 there are moreover connected two diodes 47, 49, set between the first end of the winding 45 and the connection 19, and the second end of the winding 45 and the connection 21.

Opening and closing of the controlled switches 41, 43 is controlled in a synchronous way by the control unit 39 with a duty cycle which is once again a function of the power P absorbed by the load Z.

As compared to the previous solution, the diagram shown in Fig. 8 presents the advantage that it requires a simple coil 45 instead of the transformer 31; however, it requires the use of two synchronously driven electronic switches 41, 43.

Operation of the circuit of Fig. 8 is described in what follows. During the ON phase of the two controlled switches 41, 43, the current flows on the winding 45 with the following slope:

$$\frac{dI_1}{dt} = \frac{Vi}{L}$$

where

$I_1$ is the current on the coil;
$Vi$ is the voltage across the rectifier bridge;
$t$ is the time; and
$L$ is the inductance of the winding 45.

During the OFF phase, the winding is discharged through the diodes 47, 49 onto the bulk capacitor 11, and the energy stored in the winding 45 is transferred onto said capacitor. Since the voltage across the capacitor 11 is approximately constant, the current $I_2$ has a constant slope. The same considerations as for the previous case apply as regards the waveform of the current and its envelope.

Fig. 9 represents a third embodiment of the control circuit 15. Reference numbers that are the same once again designate parts that are the same as or that correspond to the ones of the schematic circuit diagram of Fig. 1. Once again the reference number 39 designates a control unit for driving the electronic switches within the corrector circuit 15. The latter comprises a series L-C resonant cell formed by a capacitor 51 and an coil 53. The LC resonant cell is set between the connection 17 of the corrector circuit 15 and the centre 55 of a half-bridge 57 consisting of two controlled switches 59, 61 and respective diodes set in parallel 63, 65. The half-bridge 57 is set between the connections 21 and 19 of the corrector circuit. The electronic switches 59, 61 are driven by the control unit 39 with square waves that are in phase opposition with a variable frequency.

The resonance frequency $f_0$ of the LC cell is

$$f_0 = \frac{1}{2\pi \cdot \sqrt{L_1 \cdot C_1}}$$

where $L_1$ and $C_1$ are the values respectively of the inductance and of the capacitance of the LC cell. The voltage $V_1$

at the centre 55 of the half-bridge 57 is therefore a square wave, the peak voltage of which coincides with the voltage across the bulk capacitor 11.

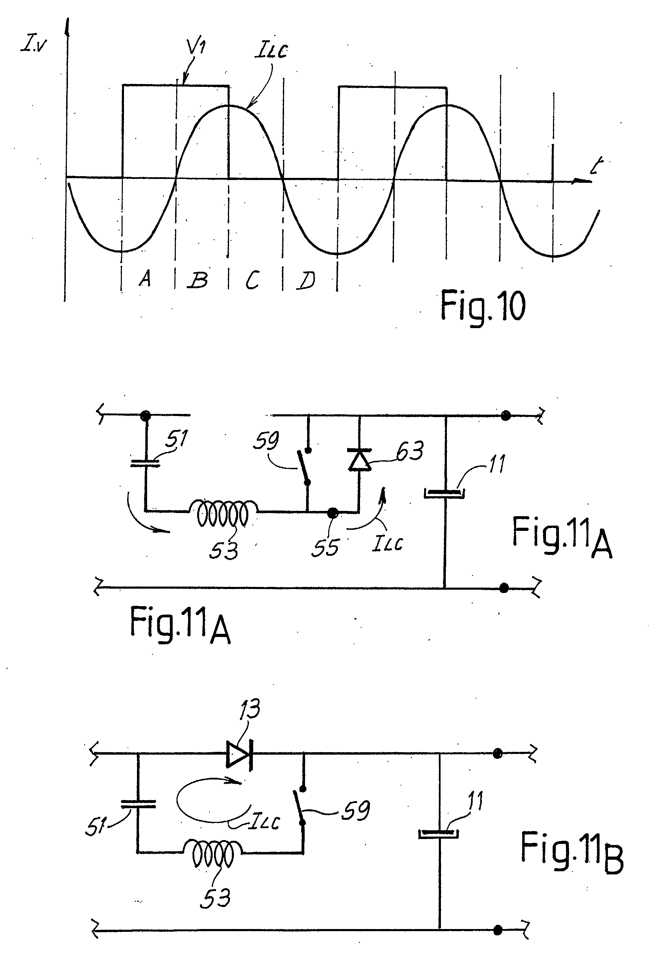

For functional reasons, the switching frequency of the switches 59 and 61 will always be higher than the resonance frequency of the LC cell. Consequently, the current flowing on the coil 53 is practically sinusoidal and is delayed with respect to the voltage $V_1$, as indicated in Fig. 10, which represents the voltage $V_1$ and the current $I_{LC}$ across the LC resonant cell. The sign of the current $I_{LC}$ is conventionally assumed with reference to the direction represented by the arrow in Fig. 9.

In order to provide a better understanding of operation the circuit illustrated in Fig. 9, it is advisable to describe the operation phases A, B, C, and D thereof that correspond to the time intervals designated in Fig. 10 by the same letters. The configurations assumed by the circuit in the various phases are shown in Figs 11A-11D.

In phase A, the circuit becomes the one indicated in Fig. 11A, and the current $I_{LC}$ is absorbed from the main and traverses the LC resonant cell formed by the capacitor 51 and the coil 53, as well as traversing the diode 63 and the bulk capacitor 11. Note that the diode 13 is turned off because the diodes of the rectifier bridge 1 are conducting.

When the current $I_{LC}$ inverts its sign, phase B starts and the circuit becomes the one shown in Fig. 11B. The diodes of the rectifier bridge 1 turn off, enabling the voltage Vi across the rectifier bridge to increase, and the current $I_{LC}$ of the LC cell can circulate again on the diode 13 and on the switch 59, which is closed.

When the switch 59 opens, and hence goes to OFF, phase C starts. The circuit diagram is the one shown in Fig. 11C. The current $I_{LC}$ flows on the diode 65 and, via the diode 13, reaches the bulk capacitor 11, which consequently charges.

When the current $I_{LC}$ inverts its sign again, phase D starts, and the circuit is the one represented in Fig. 11D. The switch 61 closes and conducts, and the current $I_{LC}$ that circulates on the resonant cell is supplied from the input.

In practice, the current is absorbed from the input, i.e., from the main, during phases A and D, and still presents the desired low-frequency envelope. The bulk capacitor is charged during phases A and C.

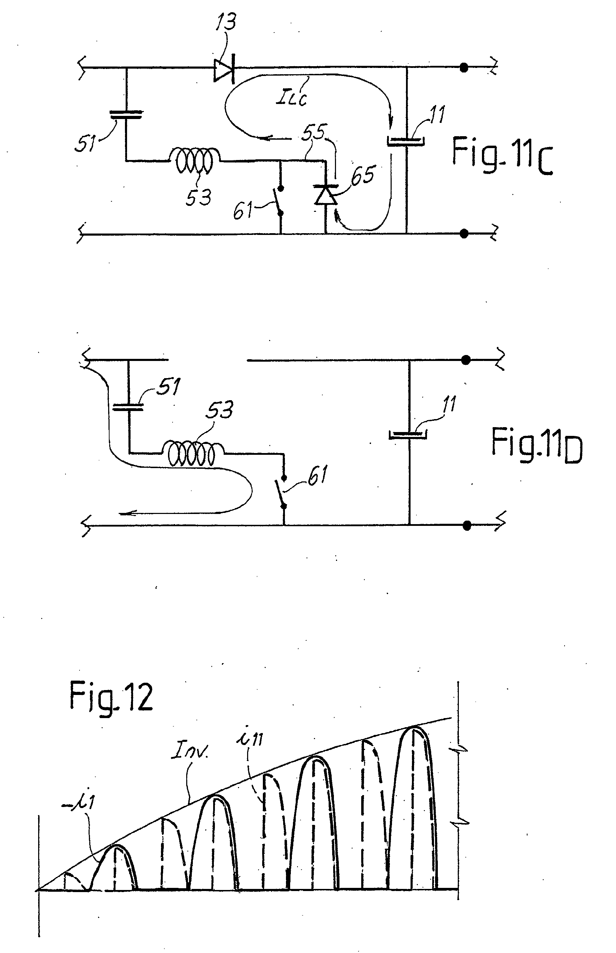

The schematic diagram of Fig. 12 represents the plots of the current $i_1$ that the circuit 15 absorbs from the main and of the current $i_{11}$ that the circuit itself supplies to the bulk capacitor 11.

Power factor correction via the circuit of Fig. 10 is obtained by intervening on the switching frequency of the controlled switches 59, 61 of the half-bridge 57. Said frequency is increased as the power absorbed by the load increases, unlike what happens in the two previous examples of embodiment, where the parameter for intervention is the duty cycle.

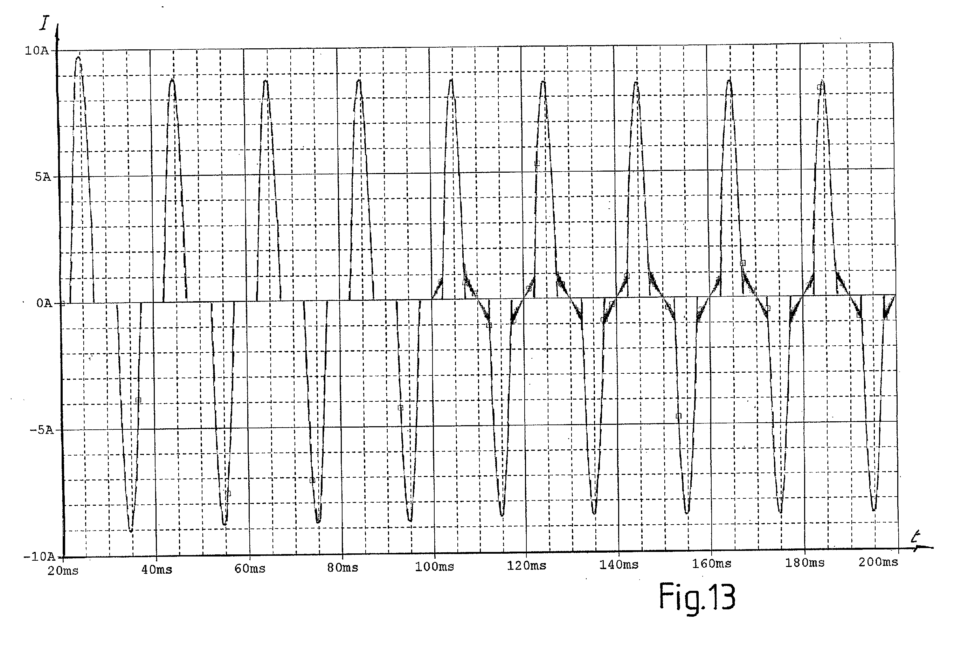

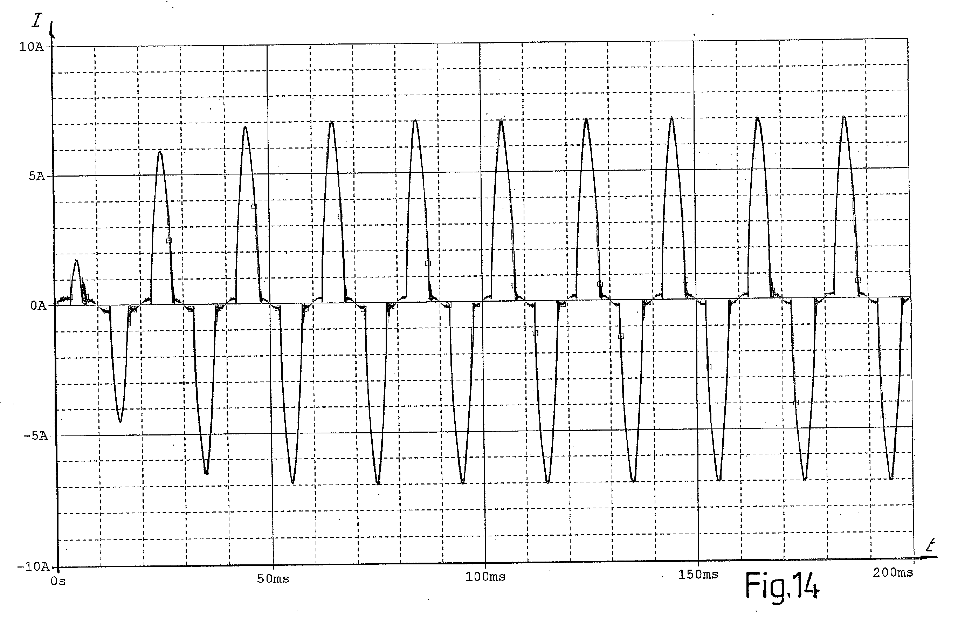

Figs 13 and 14 show diagrams of waveforms of the overall current absorbed by the device illustrated in Fig. 10. The diagram of Fig. 13 also shows, on the left-hand side, the waveform of the current without intervention of the corrector circuit.

In all the cases described, the control logic of the corrector circuit is very simple, in so far as the correction is a function of the power P absorbed by the load Z.

The strategy adopted is particularly simple, because the amount of correction depends upon the power absorbed. Reading of the power absorbed may be performed on the bulk capacitor 11. In fact, the power absorbed is given by the following equation:

$$P = \frac{1}{T_C}\int_0^{T_C} v(t)\cdot i(t)dt = \frac{1}{T_C}\int_0^{T_C} V_{DC}\cdot i(t)dt = V_{DC}\cdot I_{Average}$$

where

$i(t)$ is the current absorbed by the load;
$v(t)$ is the voltage;
$Tc$ is the measuring interval;
$V_{DC}$ is the voltage across the bulk capacitor; and
$I_{average}$ is the average current supplied to the load.

Consequently, it is sufficient to sample two slow signals ($V_{DC}, I_{average}$) at a low frequency, which is easily implementable on a low-cost microcontroller.

The microcontroller then generates the driving signal for driving the switch or switches of the corrector circuit. For example, in the case of the circuit of Fig. 6, with a switch and a transformer, a PWM output of the microcontroller may be used for controlling the single switch.

It is understood that drawing only illustrates practical embodiments of the invention, which may vary in its forms and arrangements without thereby departing from the scope of the underlying idea, as defined in the ensuing claims. The possible presence of reference numbers in the attached claims has the sole purpose of facilitating reading thereof in the light of the foregoing description, and in no way limits the sphere of protection of the present invention.

**Claims**

1. An active device power factor correction, comprising a connection to a supply network, a rectifier bridge, at least one bulk capacitor, a connection to a load circuit, and a corrector circuit for correcting the power factor, **characterized in that** through said corrector circuit there flows a fraction of the power absorbed from the supply network.

2. The device according to Claim 1, **characterized in that** said corrector circuit is connected in parallel to said rectifier bridge, said corrector circuit having a first connection to a positive pole of the rectifier bridge and a second connection to a negative pole of the rectifier bridge.

3. The device according to Claim 1 or 2, **characterized in that** through said corrector circuit there flows a current which is a function of the overall power absorbed by the load circuit, such that the overall current absorbed from the network has a power factor higher than a pre-set limit.

4. The device according to one or more of the foregoing claims, **characterized in that** the corrector circuit corrects the waveform of the current absorbed by the device by superimposing on the current absorbed by the load a current absorbed by the corrector circuit having a high-frequency pattern and a low-frequency envelope which is substantially sinusoidal.

5. The device according to Claim 4, **characterized in that** said high-frequency current has a waveform with a duty cycle which is a function of the amount of correction required from said corrector circuit.

6. The device according to Claim 4, **characterized in that** said high-frequency current has a waveform with a frequency that varies according to the amount of correction required from said corrector circuit.

7. The device according to one or more of the foregoing claims, **characterized in that** said corrector circuit is deactivated during the peaks of current absorption by the load.

8. The device according to one or more of the foregoing claims, **characterized in that** during at least a fraction of its activation time said corrector circuit transfers energy to said at least one bulk capacitor.

9. The device according to at least Claims 2 and 8, **characterized in that** the positive pole of the rectifier bridge is connected to a first plate of said at least one bulk capacitor with the interposition of at least one unidirectional element, **in that** said first connection is applied between the positive pole of the rectifier bridge and said unidirectional element, and **in that** said corrector circuit has a third connection between said unidirectional element and said first plate of the bulk capacitor.

10. The device according to one or more of the foregoing claims, **characterized in that** said corrector circuit comprises: at least a first controlled circuit, at least an inductive element, and a control unit which drives opening and closing of said at least one controlled switch.

11. The device according to Claim 10, **characterized in that** said corrector circuit comprises a transformer, the primary winding of which constitutes said inductive element and is set between said first connection and said second connection.

12. The device according to Claim 11, **characterized in that** said controlled switch is set in series to said primary winding.

13. The device according to Claim 11 or 12, **characterized in that** said transformer comprises a secondary winding set between said third connection and said second connection, the magnetizing energy stored in said transformer being transferred by means of said secondary winding to the bulk capacitor.

14. The device according to Claim 10, **characterized in that** said corrector circuit comprises a second controlled switch, and **in that** said inductive element is connected, with one first end via the first controlled switch at the first connection, between the positive pole of the rectifier bridge and the unidirectional element, and, with one second end via the second controlled switch at the second connection, to the negative pole of the rectifier bridge, said two switches being driven in a synchronous way.

15. The device according to Claim 14, **characterized in that** said first end of the inductive element is connected to the second connection via a first diode and to the third connection via a second diode.

16. The device according to Claim 10, **characterized in that** said corrector circuit comprises an LC resonant cell and a pair of controlled switches in a half-bridge arrangement.

17. The device according to Claims 2 and 16, **characterized in that** said LC resonant cell is set between said first connection and the centre of the half-bridge.

18. The device according to Claims 2, 9 and 16, **characterized in that** said half-bridge is set between said second connection and said third connection.

19. The device according to Claims 9 and 17, **characterized in that** said half-bridge is set between said second connection and said third connection.

20. The device according to one or more of Claims 16 to 19, **characterized in that** said LC resonant cell is a series LC cell.

21. The device according to one or more of the foregoing claims, **characterized in that** it comprises sensing means for detecting the power absorbed by the load, and a control unit for driving said corrector circuit according to the measurement performed by said sensing means.

22. A method for power factor correction in a supply of a load via an electrical supply network, **characterized by** modifying the waveform of the current absorbed from said network in a variable way according to the power absorbed by the load.

23. The method according to Claim 22, **characterized by** arranging a rectifier bridge in parallel to at least one bulk capacitor, across which said load is applied, and, in parallel to said rectifier bridge, a corrector circuit that absorbs from the network a current which is a function of the power absorbed by the load, to such an extent as to maintain the power factor of the overall current absorbed from the network above a pre-set value.

24. The method according to Claim 23, **characterized by** periodically detecting the current absorbed by the load and driving the corrector circuit according to the current absorbed by the load, increasing the current that traverses said corrector circuit as the power absorbed by the load increases, so as to maintain the power factor of the overall absorbed current above said pre-set value.

25. The method according to Claim 22, or 23, or 24, **characterized in that** said corrector circuit absorbs a high-frequency current having a low-frequency envelope which is substantially sinusoidal, the waveform of the current absorbed by said corrector circuit maintaining the overall power factor of the current absorbed from the network above a pre-set value.

26. The method according to Claim 25, **characterized in that** the current absorbed by the corrector circuit has a waveform with a duty cycle that is a function of the current absorbed by the load.

27. The method according to Claim 25, **characterized in that** the current absorbed by the corrector circuit has a frequency that is a function of the power absorbed by the load.

28. The method according to one or more of Claims 23 to 27, **characterized by** transferring energy from the corrector circuit to said at least one bulk capacitor.

29. The method according to one or more of Claims 22 to 28, **characterized by** determining the power absorbed by the load via detection of average voltage and average current on said at least one bulk capacitor.

Fig.1

Fig.2A

Fig.2B

Fig. 3

EP 1 274 162 A1

Fig. 4

Fig.5

EP 1 274 162 A1

Fig.6

Fig.7

Fig. 8

Fig. 9

Fig.10

Fig.11A

Fig.11A

Fig.11B

16

Fig.11C

Fig.11D

Fig.12

Fig.13

EP 1 274 162 A1

Fig.14

European Patent
Office

## EUROPEAN SEARCH REPORT

Application Number

EP 01 83 0449

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 658 968 A (NIHON PROTECTOR S) 21 June 1995 (1995-06-21) | 1-5, 7-13, 21-26, 28,29 | H02M1/00 |
| Y | * column 5, line 12 - column 11, line 37; figures 1-11B * | 6,16-20, 27 | |
| Y | US 5 517 403 A (MAEHARA) 14 May 1996 (1996-05-14) | 16-20 | |
| A | * column 3, line 60 - column 8, line 9; figures 3,17-22 * | 1-3,8-10 | |
| A | US 5 410 221 A (MATTAS ET AL) 25 April 1995 (1995-04-25) | 1,3-5, 10,16, 17, 20-25, 28,29 | |
| Y | * column 5, line 15 - column 11, line 20; figures 1-5 * | 6,27 | |
| X | EP 0 676 854 A (VLT CORPORATION) 11 October 1995 (1995-10-11) * column 1, line 1 - column 12, line 14; figures 1-7 * | 1-3,8-10 | TECHNICAL FIELDS SEARCHED (Int.Cl.7) H02M |
| A | EP 0 431 778 A (GENERAL ELECTRIC) 12 June 1991 (1991-06-12) * the whole document * | | |

The present search report has been drawn up for all claims

| Place of search | Date of completion of the search | Examiner |
|---|---|---|
| MUNICH | 3 December 2001 | Calarasanu, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 83 0449

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2001

| Patent document cited in search report | | Publication date | Patent family member(s) | | Publication date |
|---|---|---|---|---|---|
| EP 658968 | A | 21-06-1995 | JP | 7177745 A | 14-07-1995 |
| | | | CN | 1111771 A | 15-11-1995 |
| | | | DE | 69412984 D1 | 08-10-1998 |
| | | | DE | 69412984 T2 | 28-01-1999 |
| | | | EP | 0658968 A1 | 21-06-1995 |
| | | | US | 5508904 A | 16-04-1996 |
| US 5517403 | A | 14-05-1996 | JP | 6245530 A | 02-09-1994 |
| | | | CA | 2113031 A1 | 24-08-1994 |
| | | | CN | 1092913 A ,B | 28-09-1994 |
| | | | DE | 4400436 A1 | 25-08-1994 |
| | | | KR | 9704502 B1 | 28-03-1997 |
| US 5410221 | A | 25-04-1995 | CA | 2121726 A1 | 24-10-1994 |
| | | | CN | 1098242 A ,B | 01-02-1995 |
| | | | DE | 69413105 D1 | 15-10-1998 |
| | | | DE | 69413105 T2 | 15-04-1999 |
| | | | EP | 0621743 A1 | 26-10-1994 |
| | | | ES | 2122144 T3 | 16-12-1998 |
| | | | JP | 7073988 A | 17-03-1995 |
| | | | SG | 48019 A1 | 17-04-1998 |
| EP 676854 | A | 11-10-1995 | EP | 0676854 A2 | 11-10-1995 |
| | | | EP | 0881758 A2 | 02-12-1998 |
| | | | JP | 8065889 A | 08-03-1996 |
| | | | JP | 2001190074 A | 10-07-2001 |
| | | | US | 5786992 A | 28-07-1998 |
| EP 431778 | A | 12-06-1991 | US | 5019952 A | 28-05-1991 |
| | | | AU | 621271 B2 | 05-03-1992 |
| | | | AU | 6397890 A | 23-05-1991 |
| | | | CA | 2021615 A1 | 21-05-1991 |
| | | | EP | 0431778 A1 | 12-06-1991 |
| | | | JP | 3173354 A | 26-07-1991 |

EPO FORM P0459

For more details about this annex : see Official Journal of the European Patent Office, No. 12/82